# EUROPÄISCHE PATENTSCHRIFT

(11) **EP 1 807 743 B1**
(45) Veröffentlichungstag und Bekanntmachung des Hinweises auf die Patenterteilung: **21.03.2012**
(21) Anmeldenummer: 05807884.1
(22) Anmeldetag: 04.11.2005
(51) Int. Cl.: G05D 1/02

(54) **SYSTEM MIT LANDMARKEN UND MIT EINEM SELBSTFAHRENDEN GERÄT**
SYSTEM COMPRISING LANDMARKS AND A SELF-PROPELLED DEVICE
SYSTEME COMPORTANT DES POINTS DE REPERE ET UN VEHICULE A PILOTAGE AUTOMATIQUE

(30) Priorität: 04.11.2004 DE 102004053183
(43) Veröffentlichungstag der Anmeldung: 18.07.2007
(73) Patentinhaber: Inmach Intelligente Maschinen GmbH, 89077 Ulm (DE)
(72) Erfinder: KÄMPKE, Thomas, 89075 Ulm (DE); KLUGE, Boris, 89077 Ulm (DE); STROBEL, Matthias, 89079 Ulm (DE)
(74) Vertreter: Meyer, Thorsten
(86) Internationale Anmeldenummer: PCT/EP2005/011840
(87) Internationale Veröffentlichungsnummer: WO 2006/048310

(56) Entgegenhaltungen:
- US-A- 4 278 142
- US-A- 4 566 032
- US-A- 4 974 259
- US-A- 5 041 722

## Beschreibung

Die Erfindung betrifft ein System mit einem selbstfahrenden Gerät und mit einer mit Landmarken versehenen Einsatzumgebung.

Selbstfahrende Geräte sind z. B. Staubsaugerroboter, selbstfahrende Rasenmäher oder Transportgeräte. Zur flächendeckenden Bearbeitung einer Fläche ist beispielsweise eine Random-Walk-Fahrstrategie bekannt. Die Bewegung geplant geführter Geräte erfolgt typischerweise mit odometrischer Steuerung entlang von linienförmig in geringen Abständen angeordneten Landmarken oder nach einem fest vorgegebenen Wegeplan.

Eine inhärente Eigenschaft der Positionsbestimmung selbstfahrender Geräte durch Odometrie (Encoder an Antriebs- oder Laufrädern) ist, dass sich bei größer werdender zurückgelegter Fahrtstrecke die angenommene Position und Orientierung von der tatsächlichen Konfiguration des Roboters deutlich entfernt. Es ist somit nicht möglich effiziente Navigation - im Vergleich zur reinen Random-Walk-Fahrstrategien - in den Zielumgebungen ausschließlich gestützt durch odometrische Positionsbestimmung durchzuführen.

Die EP 0 774 702 A2 beschreibt für einen selbstfahrenden automatischen Roboter, beispielsweise einen Rasenmäher, welcher sich innerhalb einer Fläche mit markierter Flächengrenze bewegen soll, ein Vorgehen zur Bestimmung der Flächengrenze und zur Bearbeitung der Fläche. Die Flächengrenze kann durch Magnete, RF-Tags, stromdurchflossene Drähte etc. markiert sein. Für die Bearbeitung der Fläche können mehrere Programme wählbar vorgegeben sein.

Aus der DE 19709847 A1 ist ein Leitsystem für eine mobile Einheit eines halb oder vollautomatischen Transport- und Umschlagprozesses beschrieben, bei welchem eine Mehrzahl von RF-Transpondern in der Bewegungsfläche verteilt angeordnet und von einem Abfragegerät der mobilen Einheit abfragbar sind. Aus der einem abgefragten Transponder zugeordneten Ortsinformation sowie der Relativposition des Abfragegeräts relativ zu dem Transponder kann die absolute Position der mobilen Einheit bestimmt werden. Beispielsweise kann eine mobile Einheit entlang eines durch solche Transponder markierten festen Wegs geführt werden.

Die EP 1 313079 A2 beschreibt ein Zielführungssystem innerhalb einer Umgebung, wie z. B. eines größeren Gebäudekomplexes mittels RF-Transpondern. Eine mit einem Abfragegerät ausgerüstete Person kann zu einem gewünschten Ziel geführt werden, wobei in dem Abfragegerät eine Karte der gesamten Umgebung mit allen Transpondern gespeichert ist und beim Passieren eines eindeutig identifizierbaren Transponders eine weiterführende Navigationsanweisung, eine Zielmeldung oder eine Zusatzinformation über den passierten Punkt, z. B. Informationen über ein Geschäft dem Benutzer mitgeteilt werden können.

In der US 2003/0236590 A1 ist eine Ortsbestimmung eines mobilen Roboters durch eine Kombination eines ortsfesten absoluten Koordinatensystems mit Transpondern und einer odometrischen Positionsverfolgung innerhalb eines relativen Koordinatensystems des mobilen Roboters beschrieben. Die relativen Koordinaten werden auf das absolute Koordinatensystem abgebildet.

Aus der US 5 041 722 A ist ein Verfahren um ein unbemanntes Fahrzeug vermittels Leuchtpunkte in einer mit Hindernissen versehenen Umgebung zu steuern bekannt, bei dem vorgeschlagen ist, die Leuchtpunkte als Bewegungsinformationen so zu platzieren, dass das Fahrzeug die Hindernisse umfährt.

Bei einer aus der DE 102 20 936 A 1 bekannten Vorrichtung zur Lokalisierung mit festen und/oder veränderlichen Landmarken sind die Positionen einer Mehrzahl fester Landmarken in einer die Einsatzumgebung beschreibenden Karte gespeichert. Gespeichert sind ferner verschiebbare Objekte als veränderliche Landmarken. Eine mobile Einheit ist zur Verschiebung solcher Objekte, welche insbesondere durch Paletten gebildet sein können, ausgebildet und eine vorgenommene Verschiebung wird sofort als Veränderung in die Umgebungskarte übernommen, welche vorzugsweise auch anderen mobilen Einheiten zur Verfügung steht.

Eine globale Lokalisierung im kompletten Einsatzbereich, wie sie teilweise auf mobilen Robotersystemen eingesetzt ist, erfordert i. A. aufwendige und teure Sensorik und hohe Rechenleistung zur Auswertung derer Sensorinformation.

Der vorliegenden Erfindung liegt die Aufgabe zugrunde, ein System der einleitend genannten Art mit Landmarken und mit einem selbstfahrenden Gerät anzugeben, welches mit verringertem Aufwand eine zuverlässige Steuerung des Geräts auch innerhalb einer größeren Einsatzumgebung ermöglicht.

Diese Aufgabe wird durch ein System für ein innerhalb einer Einsatzumgebung selbstfahrendes Gerät mit den Merkmalen des Anspruchs 1 gelöst. Die abhängigen Ansprüche enthalten vorteilhafte Ausgestaltungen und Weiterbildungen der Erfindung. Wesentlich bei der vorliegenden Erfindung ist insbesondere, dass wenigstens einigen der individualisierten, d. h. erkennbaren und von anderen unterscheidbaren Landmarken eine Information zugeordnet ist, aus welcher eine Bewegungsplanung für eine durch das Gerät unter der Einwirkung der geräteeigenen Steuereinrichtung ausführbare Bewegung und/oder eine von einem gegebenenfalls in dem Gerät enthaltenen Arbeitsmodul ausführbare Arbeitsanweisung ableitbar ist. Die Arbeitsanweisung kann dabei für einen Teil der Bewegung einer Bewegungsplanung vorgegeben sein. Die einer Landmarke zugeordnete Information ist nachfolgend auch kurz nur als zugeordnete Information bezeichnet.

Als Landmarken seien in fachtypischem Begriffsgebrauch Positionsmarken innerhalb der Einsatzumgebung bezeichnet. Solche Landmarken können durch Merkmale oder Merkmalskombinationen der Einsatzumgebung gegeben oder durch gezielt in der Einsatzumgebung platzierte Markierungen, wie z. B. Laser Reflexmarken, Magnetstreifen, optische Codemuster oder vorzugsweise RFID-Transponder sein. Ein Vorteil bei der Verwendung von RFID-Transpondern ist neben deren eindeutiger Identifizierbarkeit auch die Tatsache, dass in einem Transponderspeicher die zugeordnete Information auch in größerem Umfang eingespeichert und ausgelesen werden kann. RFID-Transponder und RF-Lesegeräte zum Abfragen der Transponder sind allgemein bekannt und daher an dieser Stelle nicht weiter behandelt. Im Sonderfall kann auch ein Abfragegerät vorgesehen sein, welches auch ein Einschreiben von Information in den Transponderspeicher ermöglicht. Als minimale interpretierbare Information kann dabei eine zur Individualisierung vorgesehene Kennnummer der Landmarke angesehen werden.

Ein zulässiger oder möglicher Bewegungsbereich des selbstfahrenden Geräts sei dabei ein Teil der Einsatzumgebung und typischerweise gegenüber letzterer eingeschränkt. Landmarken und/oder Merkmale der Einsatzumgebung können insbesondere auch außerhalb des Bewegungsbereichs liegen, beispielsweise können insbesondere auch außerhalb des Bewegungsbereichs liegen, beispielsweise können Landmarken gegen Begrenzungen des Bewegungsbereichs zurückgesetzt angeordnet sein.

Hinsichtlich der Navigation des selbstfahrenden Geräts innerhalb der Einsatzumgebung bietet die Ableitung einer Wegplanung für das Gerät aus einer einer aktuell erfassten Landmarke zugeordneten Information die vorteilhafte Möglichkeit, den gesamten Bewegungsablauf eines Geräts durch die Einsatzumgebung in kürzere Bahnabschnitte oder Teilflächen aufzuteilen. Die Bahnabschnitte oder Teilflächen können dabei in Abstimmung auf die Navigationsmöglichkeiten des Geräts, insbesondere dessen abschätzbare Bahnfehler bei odometrischer Wegverfolgung so gewählt sein, dass ein durch die Bahnanweisung vorgegebenes Ziel mit hinreichender Ortsgenauigkeit erreicht wird. Im Unterschied zu Führungssystemen mit dichter Folge von Landmarken ist dabei vorteilhafterweise zumindest für einige der Bahnabschnitte oder Teilflächen die Situation gegeben, dass auf Teilen der ausgeführten Bewegungsplanung keine Landmarke im Erfassungsbereich der Erfassungseinrichtungen des Geräts liegt.

In bevorzugter Ausführungsform enthält die einer aktuell erfassten Landmarke zugeordnete Information eine Angabe zu wenigstens einer, gegebenenfalls auch mehreren weiteren unterscheidbaren Landmarken. Die abgeleitete Bewegungsplanung hat dann vorteilhafterweise eine solche weitere Landmarke zum Ziel.

An der weiteren Landmarke erfolgt eine neue Bestimmung der Geräteposition die Ableitung einer neuen Bewegungsplanung aus der dieser weiteren Landmarke als jetzt aktueller Landmarke zugeordneten Information und die Fortsetzung des Bewegungsablaufs nach Maßgabe dieser neuen Bewegungsplanung. Die Bewegungsplanungen brauchen dabei jeweils nur lokal auf die aktuelle Landmarke bezogen sein. Die Geräteposition wird vorteilhafterweise lokal, d. h. relativ zu der Position der Landmarke oder einer mit dieser korrelierten Position bestimmt. Insbesondere ist keine Einordnung der Landmarkenposition, der Geräteposition oder der Bahnanweisung in ein die gesamte Einsatzumgebung erfassendes, typischerweise als global bezeichnetes Koordinatensystem erforderlich.

Die Bewegungsplanung kann zumindest teilweise aus ausschließlich auf odometrischen Daten basierenden Wegabschnitten, insbesondere geraden Strecken, Kreisbogenabschnitten etc., zwischen aufeinander folgenden Wegstützpunkten bestehen. Geräteseitige Sensoren zur Gewinnung solcher odometrischer Daten sind an sich bekannt und können insbesondere Raddrehwinkelsensoren oder bei lenkbaren Rädern auch deren Laufrichtung detektierende Sensoren umfassen. Die Steuerung der Antriebsvorrichtungen eines selbstfahrenden Geräts zur Durchführung einer vorgegebenen Bewegung ist allgemein bekannt und daher an dieser Stelle nicht weiter behandelt.

Eine Bewegungsplanung kann auch eine oder mehrere wählbare zusammengesetzte Bewegungsformen, beispielsweise einen mäanderförmigen Bewegungsverlauf mit bestimmter Anfangsausrichtung und vorgebbarer Dimension der Schleifen, oder Kombinationen verschiedener Bewegungsvorgaben enthalten.

Eine Bewegungsplanung kann auch mit vorgebbaren Bedingungen verknüpft sein, wobei solche Bedingungen beispielsweise die Bewegungshistorie des Geräts oder Umgebungsmerkmale betreffen können. Eine an die Bewegungshistorie des Geräts geknüpfte Bewegungsplanung kann beispielsweise beinhalten, dass ein erster Teil einer Bewegungsplanung nur unter der Bedingung auszuführen ist, dass dieser Teil nicht bereits einmal im aktuellen Durchlauf durch die Einsatzumgebung ausgeführt wurde, es wird demnach auch die Arbeitsanweisungshistorie berücksichtigt. Dies kann beispielsweise sinnvoll sein, wenn eine Landmarke an einer Verzweigung angeordnet ist, in weicher mehrere unterschiedliche Abschnitte des Bewegungsablaufs zusammentreffen und dabei eine Rückkehr des Geräts zu der Landmarke an der Verzweigung auftreten kann. Ist ein solcher erster Teil der abgeleiteten Bewegungsplanung aus der Historie des Bewegungsablaufs bereits als erledigt erkennbar, wird eine nächste Teil-Bewegungsplanung ausgeführt.

Eine mit Umgebungsmerkmalen verknüpfte Bedingung einer Bewegungsplanung kann insbesondere ein die Bewegung des Geräts einschränkendes Hindernis berücksichtigen. Ein solches Hindernis kann insbesondere auch eine Wand sein. Eine an eine Hinderniserkennung geknüpfte Bedingung kann beispielsweise bei einer mäanderförmigen Bahn zwischen einen Korridor begrenzenden Wänden (oder gleich wirkenden Hindernissen) sein, dass eine Bewegung in einer Richtung bis zur Erkennung einer Wand, dann um eine kurze Vorschubstrecke der Wand entlang, dann im Winkel von 90° von der Wand weg und fortwährender Wiederholung dieser Abfolge bis zum Erreichen einer weiteren Landmarke erfolgen soll. Eine an eine Hinderniserkennung geknüpfte Bedingung in einer Bewegungsanweisung kann auch für eine flexible Strategie bei nicht vorgesehenen Hindernissen hilfreich sein, indem bei Auftreten eines Hindernisses beispielsweise die bedingte Anweisung befolgt wird, der Wand bzw. dem Umriss des Hindernisses zu folgen (wall-following-Fahrstrategie) bis ein fahrbarer Abschnitt der der ursprünglichen Bewegungsplanung entsprechenden Bewegungsbahn gefunden oder eine Landmarke erfasst wird. Die wall-following-Fahrstrategie kann auch allgemein zum Erreichen einer hierfür vorteilhafterweise in einem Wandbereich angeordneten Landmarke vorteilhaft sein.

Die einer Landmarke zugeordnete Information kann vorteilhafterweise auch Angaben für die Selbstlokalisation des Geräts relativ zu dem lokalen Bereich der aktuell erfassten Landmarke enthalten. Die Selbstlokalisation umfasst dabei sowohl Ortsposition als auch Ausrichtung des Geräts in der lokalen Umgebung als Ausgangsposition für die Bewegungsplanung. Die Angaben für die Selbstlokalisation können insbesondere auch Angaben zu Umgebungsmerkmalen enthalten, welche durch Sensoren des Geräts erfassbar sind. Solche Umgebungsmerkmale können insbesondere optisch, mechanisch oder magnetisch erfassbare Markierungen oder Eigenarten der Umgebung, z. B. auch Wände oder Ecken sein. Sensoren zur Erkennung von Hindernissen und/oder Umgebungsmerkmalen sind an sich für selbstfahrende Geräte bekannt, beispielsweise in Form von Ultraschallsensoren.

Die einer Landmarke zugeordnete Information kann in anderer Ausführung für ein Gerät mit wenigstens einem Arbeitsmodul zur Ableitung einer durch dieses Arbeitsmodul ausführbaren Arbeitsanweisung dienen. In bevorzugter Ausführungsform können aus der einer Landmarke zugeordneten Information wenigstens eine Bewegungsplanung und wenigstens eine Arbeitsanweisung abgeleitet werden, welche zumindest teilweise gleichzeitig ausgeführt. Insbesondere kann eine Arbeitsanweisung auf wenigstens einem Teil der von der Bewegungsplanung bestimmten Bahn ausgeführt werden. In besonders vorteilhafter Ausführung ist das Gerät hierbei ein selbstfahrendes Bodenreinigungsgerät oder Mähgerät.

Umgebungsmerkmale können auch zur Beschreibung von Streckenabschnitten dienen, beispielsweise in der Form, dass eine Bewegungsplanung eine Anweisung enthält, über eine vorgebbare Wegstrecke auf ein Umgebungsmerkmal zuzufahren oder in vorgebbarem Abstand parallel zu einer Wand zu fahren.

Insbesondere bei Einsatzumgebungen mit flächiger Bodenbearbeitung ist es vorteilhaft, wenigstens eine, vorzugsweise mehrere Zellen als begrenzte Teile der Einsatzumgebung zu definieren und einer solchen Zelle wenigstens eine Landmarke zuzuweisen, deren zugeordnete Information Angaben zu der Zelle, insbesondere Angaben zu Lage und Form der Zelle enthält. Die Angaben können beispielsweise eine Polygonbeschreibung der Zelle mit mehreren Stützpunkten, eine Beschreibung als Rechteck mit bestimmten Seitenlängen etc. enthalten. In anderer vorteilhafter Ausführung können auch Landmarken zur Definition von Zellengrenzen dienen. Insbesondere bei Geräten ohne eigene Sensoren zur Erkennung von Hindernissen ist vorzugsweise eine vollständige Beschreibung von Zellengrenzen durch in der zugeordneten Information einer Landmarke enthaltene Angaben vorteilhaft. Die Begrenzung einer Zelle kann auch durch Umgebungsmerkmale beschrieben sein, welche, wie z. B. Magnetstreifen oder Reflektoren, gezielt in die Einsatzumgebung eingefügt sind, oder welche, wie z. B. Ecken, Kanten oder Hindernisse inhärente Eigenschaften der Umgebung sind. Die unterschiedlichen Möglichkeiten zur Beschreibung der Begrenzung einer Zelle können auch kombiniert sein. Wesentlich ist, dass es sich um eine lokale Beschreibung handelt, für welche keine Orientierung in einem für die gesamte Einsatzumgebung einheitlich gültigen Koordinatensystem erforderlich ist.

Die Ableitung einer Bewegungsplanung aus der zugeordneten Information kann in einer ersten Ausführungsform durch Übernahme von Fahrzeuganweisungen, z. B. durch Vorgabe einer Wegform oder vorzugsweise einer Folge von mehreren Wegstützpunkten aus der zugeordneten Information selbst erfolgen. In vorteilhafter Weiterbildung können in der zugeordneten Information auch mehrere solcher Fahrweganweisungen vorgegeben sein. Vorteilhafterweise ist jede der vorgegebenen Fahranweisungen auf eine weitere Landmarke und/oder eine weitere Zelle als Ziel der Fahrweganweisung gerichtet. In anderer Ausführung kann auch nach vorgegebenen Kriterien aus den in der zugeordneten Information enthaltenen Angaben zu einer weiteren Landmarke oder Zelle, insbesondere deren Lage relativ zu der aktuellen Landmarke eine Bewegungsplanung abgeleitet werden. Von besonderem Vorteil bei einem Gerät zur flächigen Bodenbearbeitung ist die bereits erläuterte Definition von Zellen in Verbindung mit einer flächendeckenden Fahrstrategie, beispielsweise einem mäanderförmigen Fahrweg, in der Weise, dass der Fahrweg als grundsätzliche Strategie vorgegeben, aber im Detail an die Gegebenheiten der Zelle angepasst wird. Die Fahrstrategie kann dabei in der zugeordneten Information explizit oder durch das Gerät oder die auf die Zellenfläche anzuwendende Bearbeitung implizit vorgegeben sein. Bei Zulässigkeit mehrerer unterschiedlicher flächendeckender Fahrstrategien (Bewegungsstrategien für flächendeckende Bearbeitung sind beispielsweise auch beim Taschenfräsen mittels CNC-Fräsmaschinen gebräuchlich) kann auch eine der mehreren Fahrstrategien an hand der Gegebenheiten der Zelle ausgewählt werden. Innerhalb einer Zelle können auch mehrere Fahrstrategien kombiniert angewandt werden. Das Gerät ist in bevorzugter Ausführung ein Bodenreinigungsgerät mit Bodenreinigungsmodul als Arbeitsmodul. In ebenso bevorzugter Ausführung ist das Gerät ein Mähgerät, wobei das Arbeitsmodul ein Mähmodul ist.

Die Ableitung der Bewegungsplanung kann sowohl in einer Steuereinrichtung im Gerät selbst als auch bei einer Kombinationsverbindung des Geräts mit einer von diesem getrennten, insbesondere ortsfesten Steuereinheit in letzterer erfolgen. Unter der Steuereinrichtung des Geräts seien pauschal alle Einrichtungen des Geräts zusammengefasst, welche zur Auswertung, Verknüpfung und Speicherung von Daten, z. B. von der Erfassungseinrichtung zur Erfassung und Erkennung von Landmarken von geräteeigenen Sensoren, von einer gegebenenfalls gegebenen abgesetzten Steuereinheit etc., sowie zur Ansteuerung von Sensoren und Aktoren des Geräts und gegebenenfalls zur Abwicklung einer Kommunikationsverbindung vorhanden sind. Die Steuereinrichtung kann insbesondere einen programmierbaren Mikroprozessor enthalten.

In bevorzugter Weiterbildung kann die Steuereinrichtung des Geräts für den Aufbau einer Umgebungsbeschreibung in einem geräteeigenen Speicher vorbereitet, insbesondere vorprogrammiert sein. Für den Aufbau der Umgebungsbeschreibung werden vorteilhafterweise die den einzelnen Landmarken zugeordneten Informationen herangezogen. Für den Aufbau einer Umgebungsbeschreibung kann das Gerät vorteilhafterweise mit Sensoren zur Wahrnehmung von Umgebungsmerkmalen, z. B. Hindernissen oder optisch markante Kennzeichen, ausgestattet sein, deren Sensorsignale ausgewertet und zum Aufbau der Umgebungsbeschreibung gespeichert werden. Eine derartige Umgebungsbeschreibung kann neben den Angaben in den zugeordneten Informationen dann wiederum zur Ableitung einer Bewegungsplanung und/oder zur Navigationsunterstützung des fahrenden Geräts ausgewertet werden. Die Umgebungsbeschreibung kann auch teilweise oder vollständig in einer von dem Gerät abgesetzten Steuereinheit erfolgen. Die Umgebungsbeschreibung kann auch ganz oder vorzugsweise teilweise, insbesondere beschränkt auf lokalen Bezug, in einzelnen Landmarken abgespeichert werden, wenn diese, z. B. in Form von RF- Transpondern mit Schreib-LeseSpeicher für das Abspeichern von neuen Informationen ausgebildet sind.

Die Umgebungsbeschreibung kann insbesondere auch Angaben zu einer Servicestation für das Gerät, z. B. mit einer Ladestation für ein Geräteakku oder einer Auffüll- Austausch- oder Abladestation für Reinigungsmittel eines Reinigungsgeräts oder für Rasenschnitt eines Mähgerätes sein.

Die Umgebungsbeschreibung kann von Vorteil im selbstfahrenden Gerät als eine metrische oder topologische Karte mit mehreren Knoten gespeichert sein, wobei die Knoten durch Landmarken und/oder Zellen gebildet sind.

Eine Weiterbildung der Erfindung sieht vor, dass wenigstens ein Teil der einer Landmarke zugeordneten Information in der Landmarke selbst gespeichert und von den Erfassungseinrichtungen erkennbar ist.

Eine weitere Ausgestaltung der Erfindung sieht vor, dass wenigstens ein Teil der einer Landmarke zugeordneten Information in einer Speichereinrichtung des Geräts gespeichert vorliegt.

Die Erfindung ist nachfolgend an hand vorteilhafter Beispiele unter Bezugnahme auf die Abbildungen noch eingehend veranschaulicht. Dabei zeigt:
- Fig. 1: ein Beispiel einer Einsatzumgebung mit bevorzugter Landmarkenanordnung,
- Fig. 2: die Einsatzumgebung nach Fig. 1 mit alternativer Landmarkenanordnung,
- Fig. 3: eine erste Ausführung einer Zellendefinition,
- Fig. 4: eine weitere Ausführung einer Zellendefinition,
- Fig. 5: eine weitere Ausführung einer Zellendefinition,
- Fig. 6: eine Anordnung von Zellen und Landmarken innerhalb einer Einsatzumgebung,
- Fig. 7: einen topologischen Graph zur Zellenanordnung nach Fig. 6, und
- Fig. 8: einen topologischen Graph zur Landmarkenanordnung nach Fig. 6.

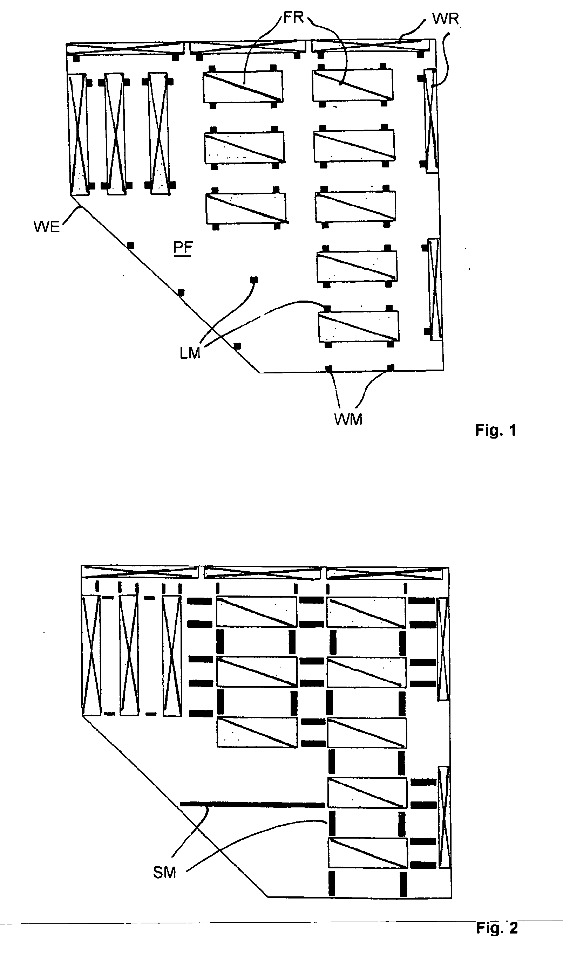

In Fig. 1 ist innerhalb einer Umrandung wie ein willkürlich gewählter Grundriss beispielsweise für einen Supermarkt mit Wandregalen WR und freistehenden Regalen FR skizziert. Das von der Begrenzungslinie WE umgebene Gebiet sei als Einsatzumgebung für ein selbstfahrendes Reinigungsgerät angenommen. Innerhalb der Einsatzumgebung ist eine zu reinigende Bodenfläche PF durch die nicht mit Regalen belegten Flächenanteile gegeben. Die zu reinigende Bodenfläche bildet dabei im wesentlichen auch den Bewegungsbereich des fahrbaren Geräts. Eine Vielzahl von Landmarken LM ist über die Einsatzumgebung verteilt angeordnet, wobei zweckmäßige Positionen der einzelnen Landmarken von der jeweiligen Aufteilung der Einsatzumgebung abhängig sind. Vorteilhafterweise sind einige Landmarken LM entlang eines freien, d. h. nicht mit Regalen verbauten Wandabschnitts positioniert. Dies ermöglicht ein besonders einfaches und zuverlässiges Auffinden solcher Landmarken durch eine Wandfolge-Fahrstrategie. Die Landmarken können gegen die Begrenzung der zu reinigenden Bodenfläche geringfügig zurückgesetzt angeordnet sein.

Das oben und die im folgenden beschriebenen Beispiele und Ausgestaltungen ist auf ein Mähgerät mit einem Mähmodul als Arbeitsmodul in einem mit Landmarken versehenen Außenbereich übertragbar.

Die Landmarken LM, WM in einer Anordnung nach Fig. 1 sind vorteilhafterweise im wesentlichen punktförmig und sind vorzugsweise als RFID-Transponder ausgebildet.

Eine vorteilhafte Anordnung der Landmarken LM, WM zum effizienten Auffinden derselben z.B. durch Wandfolgen kann nahe oder unmittelbar an Wänden erfolgen. Im Falle der Ausgestaltung des Gerätes eines Mähgerät können Teile der Landmarken LM, WM entlang des bei bestehenden Mähroboterinstallationen vorhandenen Begrenzungsdrahts zur Begrenzung des Arbeitsgebiets ausgelegt sein.

Ebenso können vorteilhafterweise Teile des Begrenzungsdrahtes durch Anordnen erfindungsgemäßer linienförmiger Landmarken SM ersetzt werden.

In Fig. 2 ist mit derselben Einsatzumgebung wie in Fig. 1 eine Ausführung skizziert, bei welcher linienförmige Landmarken vorgesehen sind. Die linienförmigen Landmarken können als einheitliche langgezogene Landmarken oder als dichte Folge einzelner Landmarken realisiert sein.

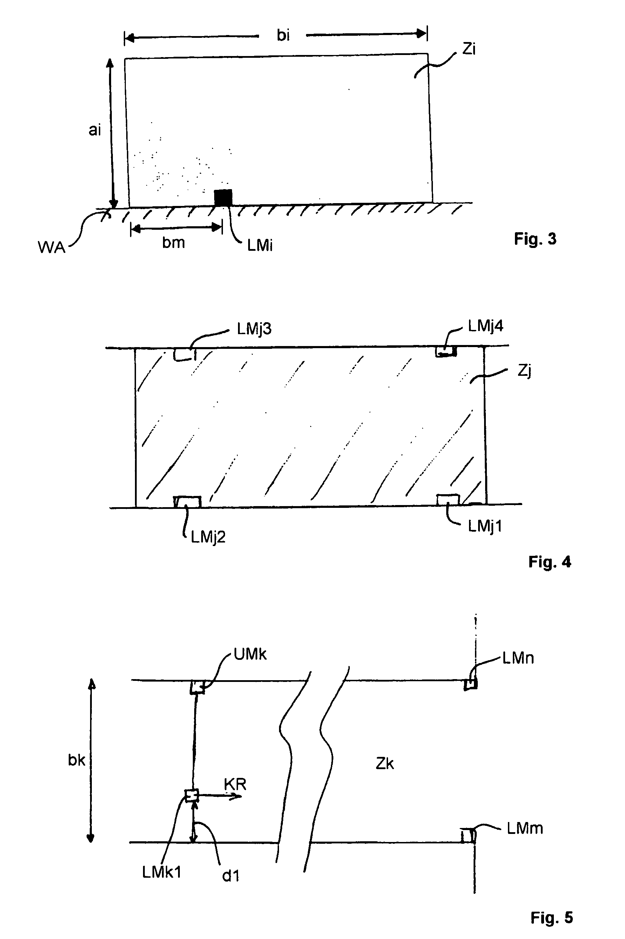

Fig. 3 zeigt ein erstes Beispiel der Definition einer Zelle Zi als einem lokalen begrenzten Bereich innerhalb der größeren Einsatzumgebung mit einer Landmarke LMi. Die Landmarke LMi sei in dem gewählten Beispiel an oder nahe einer Wand WA angeordnet. Die Landmarke sei von Erfassungseinrichtungen eines in die Nähe der Landmarke LMi gelangenden selbstfahrenden Geräts erfassbar und, beispielsweise durch eine Identitätsnummer i, als individuelle Landmarke LMi erkennbar. Eine der Landmarke LMi zugeordnete, beispielsweise in einem eigenen Speicher der Landmarke LMi auslesbar abgelegte Information enthalte Angaben zu Form und Größe der Zelle Zi und der Ausrichtung der Zelle Zi bezüglich der Landmarke LMi. Eine Form solcher Angaben kann beispielsweise darin bestehen, dass angegeben ist, dass sich die Landmarke LMi an einer Wand WA befinde und die Zelle Zi rechteckig sei mit einer Erstreckung ai senkrecht zur Wand und einer Erstreckung bi parallel zur Wand, wobei sich die Landmarke LMi in einem Abstand bm vom linken Zellenrand befindet. Die Zelle Zi ist damit in lokaler Beschreibung relativ zur Landmarke LMi vollständig als begrenzte lokale Fläche beschrieben. Eine Bewegungsplanung für ein genau am Ort der Landmarke LMi befindliches Gerät könnte z. B. die Anweisung enthalten, eine Strecke bm entlang der Wand nach links zu fahren und dann beginnend mit einer senkrecht zur Wand gerichteten Wegstrecke der Länge ai nach rechts fortschreitend mäanderförmig die gesamte Zellenfläche der Zelle Zi zu überstreichen und nach Beendigung dieser Anweisung zu einer in Fig. 3 nicht mit dargestellten weiteren Zelle oder weiteren Landmarke, welche in der der Landmarke LMi zugeordneten Information gleichfalls angegeben ist, zu fahren. Eine Arbeitsanweisung kann währenddessen ausgeführt werden.

In dem in Fig. 4 skizzierten Beispiel sei eine Zelle Zj als lokal begrenzte Fläche innerhalb der Einsatzumgebung vorgesehen, welche der Einfachheit halber wieder als rechteckig angenommen sei. In diesem Beispiel sind der Zelle Zj vier Landmarken LMj1 bis LMj4 zugewiesen, welche jeweils Angaben zu Form, Lage und Größe der Zellenfläche in zugeordneten Informationen enthalten. Die Angaben in den den Landmarken LMj1 bis LMj4 zugeordneten Informationen können auch einander ergänzende Angaben enthalten. Vorzugsweise sind aber die Angaben in den einzelnen zugeordneten Informationen jeweils soweit vollständig, dass allein aus einer der zugeordneten Informationen eine Bewegungsplanung für ein Gerät zum vollständigen Überstreichen der Zellenfläche ableitbar ist. Die mehreren Landmarken LMj1 bis LMj4 erlauben einen Zeileneintritt des selbstfahrenden Geräts an verschiedenen Stellen und dabei jeweils eine vollständige Arbeitsanweisung.

Bei dem Beispiel nach Fig. 5 ist eine Zelle Zk nach Art eines Korridors mit konstanter Breite bk vorgesehen, innerhalb dessen eine Landmarke LMk1 mit einer zugeordneten Information angeordnet ist. Die der Landmarke LMk1 zugeordnete Information kann beispielsweise angeben, dass ausgehend von einer Positionsbestimmung des Geräts am Ort der Landmarke LMk1 und Festlegung einer Korridorrichtung KR die rechte Grenze des Korridors um eine Distanz d1 von der Landmarke LMk1 beabstandet liegt und die bezüglich der Korridorrichtung KR linke Korridorbegrenzung durch ein von Sensoren des Geräts erfassbares Umgebungsmerkmal UMk, beispielsweise einen Magneten markiert ist. Hieraus kann beispielsweise als Bewegungsplanung abgeleitet werden, dass beginnend bei einer Position um d 1 von der Landmarke LMk1 rechts beabstandet und senkrecht zur Korridorrichtung KR verlaufend ein erster Wegabschnitt bis zu der magnetischen Marke UMk1 zurückzulegen ist, woraus sich implizit der Abstand zwischen UMk und LMk1 bzw. die gesamte Korridorbreite bk ergeben, und danach der Korridor mäanderförmig mit gleich bleibendem Vorschub in Korridorrichtung flächendeckend überstrichen wird. Die Länge des Korridors in Korridorrichtung KR kann dabei unbeziffert bleiben, wobei zweckmäßigerweise eine weitere Landmarke LMm oder LMn am Ende des Korridors als Ziel angegeben wird, wo eine neue Positionsbestimmung des Geräts stattfindet und aus der einer dieser Ziel-Landmarken zugeordneten Information eine neue Bewegungsplanung abgeleitet wird.

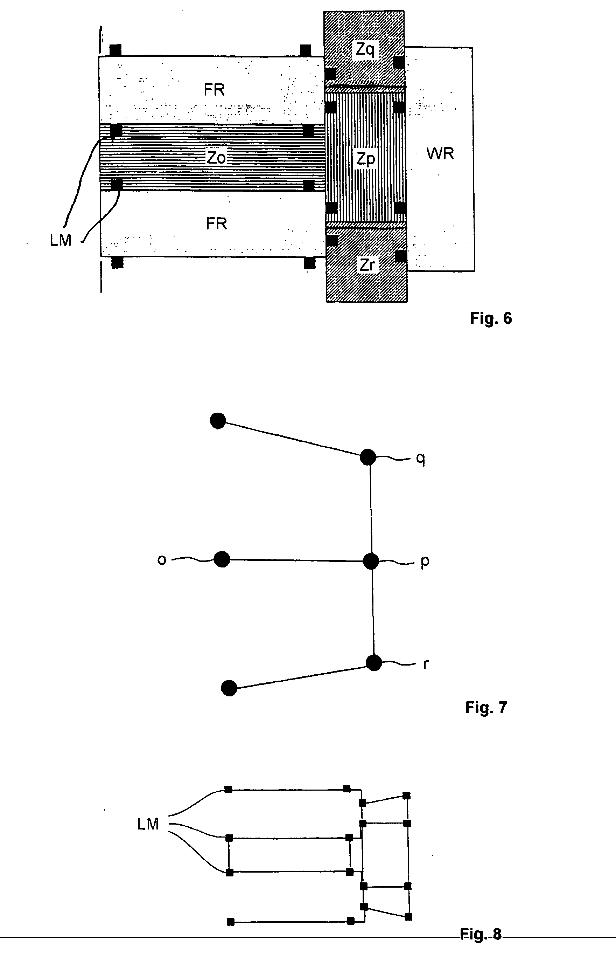

In Fig. 6 ist ein Ausschnitt aus einer Einsatzumgebung mit zwei freistehenden Regalen FR und einem Wandregal WR skizziert. In der zwischen den Regalen freien Fläche ist eine Flächenaufteilung in mehrere Zellen vorgenommen, weiche sich auch überlappen können. Im einzelnen bezeichnet sind Zellen Zo, Zp, Zq und Zr. Eine beispielsweise zur flächendeckenden Überstreichung der Zelle Zo abgeleitete Bewegungsplanung kann als Abschluss-Bewegungsanweisung enthalten, zur Zelle Zp oder zu einer bestimmten der Zelle Zp zugewiesenen Landmarke weiter zu fahren. Eine solche Abschluss-Anweisung kann auch teilweise dadurch gegeben sein, dass für einen globalen Bewegungsablauf durch die gesamte Einsatzumgebung eine Zellenfolge, beispielsweise Zo->Zp->Zq->Zr vorgegeben ist und aus den den Landmarken der Zelle Zo zugeordneten Informationen ableitbar ist, wie die Zelle Zp bzw. eine der dieser zugewiesenen Landmarken erreichbar ist.

Für das Aufteilungsbeispiel der Fig. 6 kann beispielsweise ein topologischer Graph mit den einzelnen Zellen als Knoten wie in Fig. 7 ausschnittsweise skizziert dargestellt werden. Der Ausschnitt nach Fig. 7 kann als Teil einer lokalen Umgebungsbeschreibung der Zelle ZP mit allen direkt angrenzenden Zellen gesehen werden. Für die Beschreibung der gesamten Einsatzumgebung ist dann ein entsprechend komplexerer Graph mit allen Zellen aufstellbar.

Eine andere Darstellung einer lokalen Umgebungsbeschreibung ähnlich Fig. 7, hier aber mit den einzelnen Landmarken als Knoten des Graphs ist in Fig. 8 gegeben. Auch in dieser Darstellungsweise kann ein vollständiger Graph für die gesamte Einsatzumgebung als globale Umgebungsbeschreibung aufgestellt werden.

Die einer Landmarke zugeordnete Information kann beispielsweise die folgenden Teilinformationen enthalten:
I. Identifizierung und Lokalisation
   a) Eindeutiger Identifier der Landmarke
   b) Position der Landmarke in der lokalen Umgebung
   c) ldentifier der Zelle, der diese Landmarke zugewiesen ist
   d) Nummer der Landmarke innerhalb dieser Zelle
II. Zellen-Beschreibung (z.B. durch Polygon)
   a) Anzahl n der Polygonstützpunkte
      lokale Position Polygonstützpunkt 1
      lokale Position Polygonstützpunkt 2
      lokale Position Polygonstützpunkt n
   b) Anzahl m der Landmarken zu dieser Zelle
      lokale Position Landmarke 1
      lokale Position Landmarke m
   c) Servicestation in der Zelle
      lokale Position der Servicestation
III. benachbarte Landmarken und Wege dorthin
   a) Anzahl t benachbarter Landmarken
      a1) Anzahl p1 Wegstützpunkte zur benachbarten Landmarke 1 Wegstützpunkt 11
         Wegstützpunkt p1
      a2) Anzahl p2 Wegstützpunkte zur benachbarten Landmarke 2
         Wegstützpunkt 21
         at) Anzahl pt Wegstützpunkte zur benachbarten Landmarke t Wegstützpunkt t1
         Wegstützpunkt pt
IV. benachbarte Zellen und Wege dorthin
   a) Anzahl nc benachbarter Zellen
      a1) Anzahl w1 Wegstützpunkte zur Nachbarzelle 1 Wegstützpunkt 11
         Wegstützpunkt w1
         anc) Anzahl wnc Wegstützpunkte zur Nachbarzelle nc Wegstützpunkt nc11
         Wegstützpnkt wnc
V. Arbeitsanweisungsspezifische Parameter Mähwerkzeug einsetzen / Reinigungswerkzeug einsetzen
   (Ende der zugeordneten Information)

## Patentansprüche

1. System für ein innerhalb einer Einsatzumgebung selbstfahrendes Gerät mit einer Steuereinrichtung und von dieser steuerbaren Antriebseinrichtung, wobei
a) in der Einsatzumgebung eine Mehrzahl individualisierter Landmarken (LMi, WM, SM) angeordnet ist,
b) das Gerät Erfassungseinrichtungen zum Erfassen und Erkennen einer im Erfassungsbereich des Geräts befindlichen Landmarke enthält,
c) zumindest einigen der Landmarken eine durch eine Steuereinrichtung interpretierbare Information zugeordnet ist,
d) zumindest aus einer der zugeordneten Informationen jeweils
- eine Bewegungsplanung für das Gerät ableitbar ist und die Steuereinrichtung die Antriebseinrichtungen zur Ausführung der Bewegungsplanung ansteuert und/oder
- das Gerät wenigstens ein Arbeitsmodul enthält und zumindest aus einer der zugeordneten Informationen eine Arbeitsanweisung für das Arbeitsmodul ableitbar ist und die Steuereinrichtung das Arbeitsmodul zur Ausführung der Arbeitsanweisung ansteuert, **dadurch gekennzeichnet, dass**;
e) die Bewegungsplanung eine mit der Bewegungshistorie des Geräts verknüpfte Bedingung enthält, wonach die aktuellen und/oder zukünftigen Bewegungsplanungen und/oder Arbeitsanweisungen bedingt werden.

2. System nach Anspruch 1,
**dadurch gekennzeichnet,**
**dass** wenigstens eine Landmarke (LMi) einer Zelle (Zi) als begrenztem Teil der Einsatzumgebung zugewiesen ist und die der Landmarke zugeordnete Information Angaben zu der Zelle enthält.

3. System nach einem der Ansprüche 1 bis 2,
**dadurch gekennzeichnet,**
**dass** eine einer Landmarke zugeordnete Information Angaben zu wenigstens einer weiteren Landmarke und/oder wenigstens einer weiteren Zelle enthält, wobei insbesondere eine abgeleitete Bewegungsplanung eine weitere Landmarke und/oder eine weitere Zelle als Ziel hat.

4. System nach einem der Ansprüche 1 bis 3,
**dadurch gekennzeichnet,**
**dass** das Gerät für die Ausführung einer Bewegungsplanung zumindest teilweise über geräteseitige Bewegungssensoren zur odometrischen Erfassung verfügt und/oder über Sensoren zur Erfassung von räumlich lokalisierbaren Umgebungsmerkmalen verfügt und/oder einen Sensor zur Erfassung von die Bewegung des Geräts einschränkenden Hindernissen ausweist.

5. System nach Anspruch 1,
**dadurch gekennzeichnet,**
**dass** eine Bewegungsplanung zumindest abschnittsweise eine mit Umgebungsmerkmalen verknüpfte Bedingung, insbesondere eine Anweisung zum Verfolgen eines ausgedehnten Hindernisses (Wandfolgeanweisung) enthält.

6. System nach Anspruch 1,
**dadurch gekennzeichnet,**
**dass** das Arbeitsmodul ein Reinigungsmodul oder Mähmodul ist.

7. System nach Anspruch 1,
**dadurch gekennzeichnet,**
**dass** die Steuereinrichtung zum Aufbau und zur Speicherung einer Umgebungsbeschreibung der Einsatzumgebung vorbereitet ist, wobei die einzelnen Landmarken zugeordnete Information zum Aufbau der Umgebungsbeschreibung herangezogen werden, wobei insbesondere von Umgebungssensoren erfasste Umgebungsmerkmale zum Aufbau der Umgebungsbeschreibung herangezogen werden.

8. System nach Anspruch 7,
**dadurch gekennzeichnet,**
**dass** die Umgebungsbeschreibung Angaben zu wenigstens einer Servicestation für das Gerät enthält.

9. System nach Anspruch 1,
**dadurch gekennzeichnet,**
**dass** Landmarken als RF-Transponder und die Erfassungseinrichtungen als RF-Lesegeräte ausgeführt sind.

10. System nach Anspruch 1,
**dadurch gekennzeichnet,**
**dass** die einer Landmarke zugeordnete Information zur Selbstlokalisierung des Geräts ausgewertet wird, wobei insbesondere die zugeordnete Information Angaben zu Umgebungsmerkmalen zur Bestimmung der Geräteposition enthält.

11. System nach einem der Ansprüche 1 bis 10,
**dadurch gekennzeichnet,**
**dass** wenigstens ein Teil der einer Landmarke zugeordneten Information durch das Gerät über Kommunikationseinrichtungen aus einem von Gerät und Landmarke getrennten Speicher abrufbar ist.

12. System nach einem der Ansprüche 1 bis 11,
**dadurch gekennzeichnet,**
**dass** die Landmarken (LMi, WM, SM) zur Begrenzung der Zellen (Zi) nahe deren Eckpunkten platziert werden.

## Claims

1. A system for a self-propelled device within an application environment comprising a control device and drive device which is able to be controlled thereby,
a) a plurality of individualised landmarks (LMi, WM, SM) being arranged in the application environment,
b) the device containing detection devices for detecting and identifying a landmark located in the detection range of the device,
c) data which is able to be interpreted by a control device being assigned to at least some of the landmarks,
d) at least from part of the assigned data, in each case
- the motion planning being able to be deduced for the device and the control device activating the drive devices for implementing the motion planning and/or
- the device containing at least one working module and operating instructions for the working module being able to be deduced from at least part of the assigned data, and the control device activating the working module for implementing the operating instructions, **characterised in that**
e) the motion planning contains a condition associated with the motion history of the device, on which the current and/or future motion planning and/or operating instructions depend.

2. The system according to Claim 1, **characterised in that** at least one landmark (LMi) is allocated to a cell (Zi) as a defined part of the application environment and the data assigned to the landmark contains information about the cell.

3. The system according to one of Claims 1 to 2, **characterised in that** data assigned to a landmark contains information about at least one further landmark and/or at least one further cell, the objective of a deduced motion planning being, in particular, a further landmark and/or a further cell.

4. The system according to one of Claims 1 to 3, **characterised in that** the device for implementing the motion planning is at least partially equipped with motion sensors on the device, for odometric detection, and/or sensors for detecting spatially localisable environment features and/or a sensor for detecting obstacles restricting the motion of the device.

5. The system according to Claim 1, **characterised in that** the motion planning at least partially contains a condition associated with environment features, in particular a command for following an extensive obstruction (wall-following command).

6. The system according to Claim 1, **characterised in that** the working module is a cleaning module or mowing module.

7. The system according to Claim 1, **characterised in that** the control device is set up to create and store an environment description of the application environment, data assigned to the individual landmarks being used for creating the environment description, environment features detected by environment sensors being used, in particular, for creating the environment description.

8. The system according to Claim 7, **characterised in that** the environment description contains information about at least one service station for the device.

9. The system according to Claim 1, **characterised in that** landmarks are designed as RF transponders and the detection devices are designed as RF reading devices.

10. The system according to Claim 1, **characterised in that** data assigned to a landmark is evaluated for self-localisation of the device, the assigned data containing, in particular, information about environment features for determining the device position.

11. The system according to one of Claims 1 to 10, **characterised in that** at least part of the data assigned to a landmark may be recalled by the device via communication devices from a memory which is separate from the device and landmark.

12. The system according to one of Claims 1 to 11, **characterised in that**, for defining the cells (Zi), the landmarks (LMi, WM, SM) are positioned in the vicinity of the corner points thereof.

## Revendications

1. Système pour un appareil automoteur dans un environnement d'utilisation, avec un dispositif de commande et un dispositif d'entraînement commandable par celui-ci, dans lequel
a) une pluralité de points de repère individualisés (LMi, WM, SM) sont prévus dans l'environnement d'utilisation,
b) l'appareil contient des dispositifs de détection, pour la détection et la reconnaissance d'un point de repère situé dans la zone de détection de l'appareil,
c) une information apte à être interprétée par un dispositif de commande est attribuée au moins à certains des points de repère,
d) à partir d'au moins l'une des informations attribuées,
- un plan de déplacement peut être déduit pour l'appareil, et le dispositif de commande actionne les dispositifs d'entraînement pour l'exécution du plan de déplacement, et/ou
- l'appareil contient au moins un module de travail, et une consigne de travail pour le module de travail peut être déduite à partir d'au moins une des informations attribuées, et le dispositif de commande actionne le module de travail pour l'exécution de la consigne de travail,
**caractérisé en ce que**
e) le plan de déplacement contient une condition liée à l'historique de déplacement de l'appareil, selon laquelle sont déterminés les plans de déplacement actuels et/ou futurs et/ou les consignes de travail.

2. Système selon la revendication 1,
**caractérisé en ce que**
au moins un point de repère (LMi) est assigné à une cellule (Zi) en tant que délimitation de l'environnement d'utilisation, et l'information attribuée au point de repère contient des indications relatives à la cellule.

3. Système selon l'une des revendications 1 à 2,
**caractérisé en ce que**
une information attribuée à un point de repère contient des indications concernant au moins un autre point de repère et/ou au moins une autre cellule, dans lequel un plan de déplacement déduit a en particulier pour but un autre point de repère et/ou une autre cellule.

4. Système selon l'une des revendications 1 à 3,
**caractérisé en ce que**
l'appareil pour l'exécution d'un plan de déplacement est doté au moins partiellement de capteurs de déplacement côté appareil pour la détection odométrique, et/ou est doté de détecteurs pour la détection de caractéristiques environnementales localisables dans l'espace, et/ou comporte un détecteur pour la détection d'obstacles limitant le déplacement de l'appareil.

5. Système selon la revendication 1,
**caractérisé en ce que**
un plan de déplacement contient, au moins par sections, une condition liée aux caractéristiques environnementales, en particulier une indication concernant le suivi d'un obstacle étendu (indication de suivi du mur).

6. Système selon la revendication 1,
**caractérisé en ce que**
le module de travail est un module de nettoyage ou de fauchage.

7. Système selon la revendication 1,
**caractérisé en ce que**
le dispositif de commande est conçu pour l'élaboration et l'enregistrement d'une description de l'environnement d'utilisation, où l'information attribuée à différents points de repère est prise en compte dans l'élaboration de la description de l'environnement, et où les caractéristiques détectées par les détecteurs d'environnement sont en particulier prises en compte dans l'élaboration de la description de l'environnement.

8. Système selon la revendication 7,
**caractérisé en ce que**
la description de l'environnement contient des indications relatives à au moins une station d'entretien destinée à l'appareil.

9. Système selon la revendication 1,
**caractérisé en ce que**
les points de repère sont conçus comme des transpondeurs RF, et les dispositifs de détection sont conçus comme des lecteurs RF.

10. Système selon la revendication 1,
**caractérisé en ce que**
l'information attribuée à un point de repère est évaluée pour la localisation automatique de l'appareil, où l'information attribuée contient en particulier des indications relatives aux caractéristiques environnementales, pour la détermination de la position de l'appareil.

11. Système selon l'une des revendications 1 à 10,
**caractérisé en ce que**
au moins une partie des informations attribuées à un point de repère peut être extraite par l'appareil, au moyen de dispositifs de communication, à partir d'une mémoire séparée de l'appareil et du point de repère.

12. Système selon l'une des revendications 1 à 11,
**caractérisé en ce que**
pour la délimitation des cellules (Zi), les points de repère (LMi, WM, SM) sont placés à proximité des coins de celles-ci.
